# EUROPEAN PATENT SPECIFICATION

(11) **EP 3 221 192 B1**
(45) Date of publication and mention of the grant of the patent: **13.11.2019**
(21) Application number: 15804978.3
(22) Date of filing: 19.11.2015
(51) Int. Cl.: B60R 16/033

(54) **CHARGING SYSTEM OF A PAIR OF BATTERIES MUTUALLY CONNECTED IN SERIES OF A HEAVY VEHICLE AND HEAVY VEHICLE IMPLEMENTING THE SYSTEM**
LADESYSTEM EINES MITEINANDER IN SERIE VERBUNDENEN BATTERIEPAARES EINES SCHWERLASTFAHRZEUGS UND SCHWERLASTFAHRZEUG MIT DIESEM SYSTEM
SYSTÈME DE CHARGE D'UNE PAIRE DE BATTERIES MUTUELLEMENT CONNECTÉES EN SÉRIE D'UN VÉHICULE POIDS LOURD, ET VÉHICULE POIDS LOURD METTANT EN OEUVRE LE SYSTÈME

(30) Priority: 19.11.2014 IT TO20140956
(43) Date of publication of application: 27.09.2017
(73) Proprietor: Iveco S.p.A., 10156 Torino (IT)
(72) Inventor: PORRELLO, Gabriele, I-10025 Pino Torinese (IT)
(74) Representative: Fiume, Orazio
(86) International application number: PCT/IB2015/058971
(87) International publication number: WO 2016/079705

(56) References cited:
- EP-A1- 2 538 521
- EP-A2- 1 655 166
- WO-A1-84/01475
- WO-A1-2009/145709
- DE-A1-102009 053 691
- US-A1- 2005 151 509
- US-A1- 2006 007 622

## Description

### Field of application of the invention

The present invention refers to the field of systems for charging vehicle batteries and in particular at least a pair of batteries mutually connected in series. Such a charging system is described in e.g. EP 1 655 166.

### Prior art

In heavy vehicles, such as industrial vehicles or buses, the vehicle electrical system has a supply voltage of 24V. This means using at least a pair of 12V batteries connected in series to achieve said 24V.

Although the individual cells, usually six, that make up a battery are practically identical, in that they are part of the same production batch, the two complete batteries, with all probability, have different dynamic behaviour.

In other words, one of the two tends to charge less because it has a higher internal resistance, while the other tends to charge more. This creates a difference between the voltages and increases fatigue on the battery as the charging and discharging cycle is performed more frequently.

The vehicle power generation system also comprises alternators, which generally produce electrical power at a fixed charge voltage.

If the supply voltage to the battery with the higher internal resistance could be increased, it would have been possible to charge it fully, but this is not possible, since it is connected in series to the other battery and, in conventional systems, the connection between the positive terminal and the negative terminal is not connected to the vehicle electrical power supply system. Therefore, the battery with the higher internal resistance cannot be fully charged, without overcharging the other battery.

### Summary of the invention

The aim of the present invention is to provide a system to control the charging of a pair of vehicle batteries mutually connected in series.

The idea at the basis of the present invention is to charge the batteries intermittently at a constant current rate.

In other words, the voltage is measured at the ends of each single battery connected in series. When the difference in voltage between the two batteries exceeds a predefined threshold, an electric generator is operated to charge the pair of batteries. At the same time, the derivative of the current absorbed by the series is monitored. When said derivative exceeds a predefined negative threshold value, that is to say, when there is a significant drop in the output current, charging of the batteries is interrupted.

Tests have shown that by charging the series of vehicle batteries in this way it is possible to reduce the intrinsic imbalance between the single batteries, and extend the life of the battery with the lower internal resistance.

The object of the present invention is a charging system for a pair of batteries mutually connected in series of a heavy vehicle, as set forth in claim 1.

A further object of the present invention is a method for charging a pair of batteries mutually connected in series of a heavy vehicle.

Yet a further object of the present invention is a heavy vehicle equipped with at least a pair of batteries and the aforesaid control system.

The claims are an integral part of the present description describing preferred embodiments of the invention.

### Brief description of the figures

Further purposes and advantages of the present invention will become clear from the following detailed description of a preferred embodiment (and alternative embodiments) thereof and from the accompanying drawings which are merely illustrative and not limiting, in which:
figure 1 is a schematic illustration of a charging system of a pair of batteries mutually connected in series of a heavy vehicle;
in figure 2, a front power take-off (PTO) transfers engine power via a belt to the vehicle's various power-driven devices, including three generators designed to charge the batteries in figure 1.

In the drawings the same numbers and letters indicate the same parts and components.

Within the scope of the present invention, the term "second" component does not imply the presence of a "first" component. Such terms are simply used for the sake of clarity and should not be considered as limiting the scope of the invention.

### Detailed description of embodiments of the invention

A heavy vehicle with a vehicle electrical system that has a supply voltage of 24V is provided with at least one pair of batteries B1 and B2 mutually connected in series, with the external poles of the series connected to the vehicle electrical power supply system schematically illustrated by means of two horizontal lines. As in conventional systems, the series connection between the positive terminal of one battery and the negative terminal of the other battery is in no way connected to the vehicle electrical power supply system or to a terminal of an alternator of any kind whatsoever. In other words, said series clamping is isolated from the vehicle electrical power supply system.

A series of batteries is generally indicated by B1+B2 and it is therefore clear that only the external poles of the series are connected to the vehicle electrical system.

One or more alternators G3, G2, G1, etc. are connected to the same system.

The alternators are controlled by processing means VCU, generally installed onboard the vehicle.

Preferably, said alternators are smart alternators, provided with their own processing means suitable for monitoring and controlling the functioning of the alternator defining the alternator and comprising means of communication to dialogue with the vehicle processing means.

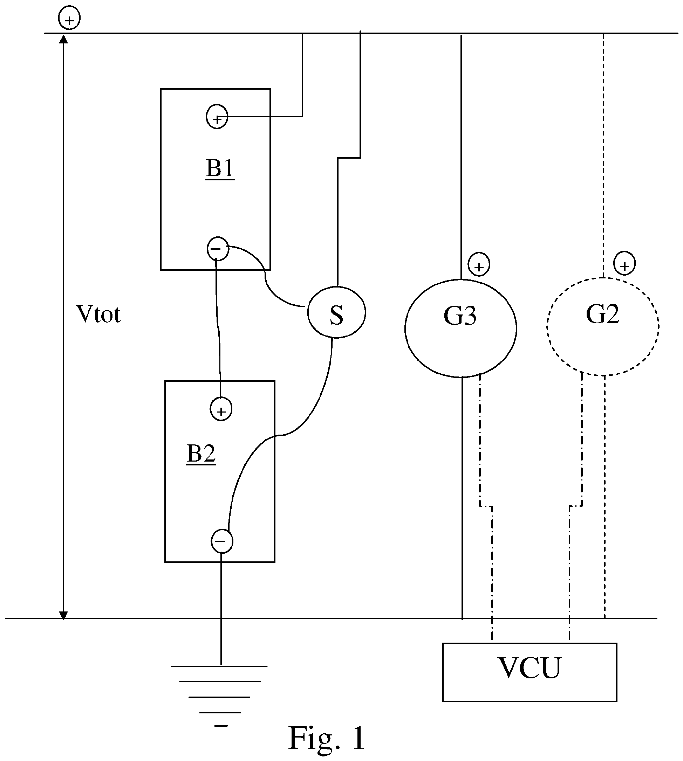

A pin called "lin" is used to establish a serial communication link, via a "lin bus" communication channel (indicated by the dash-dot lines in figure 1) between the processing means onboard the smart alternator and the vehicle, generally, the vehicle processing unit VCU or the engine control unit ECU.

Via said communication system, said generators are generally controlled to recover braking energy, by adjusting the current supply voltage according to the vehicle's operating conditions.

According to the present invention the vehicle processing means VCU (or ECU) are configured to monitor the voltage Vtot at the ends of the series and the voltage at the ends of each battery and when a difference between said voltages at the ends of the single batteries exceeds a predefined threshold, to control the at least one alternator G3 so as to adjust the supply voltage in order to charge the series of batteries B1 + B2.

At the same time, the derivative of the current absorbed by the series B1 + B2 is monitored. When said derivative exceeds a predefined negative threshold value, that is to say, when the current absorbed decreases, the vehicle processing means VCU command the interruption of the battery charging process.

In the long term, this achieves alternate charging at a constant current rate.

This strategy makes it possible to reduce the difference in the level of charge between the batteries B1 and B2.

When the processing means VCU command the at least one alternator G3 to interrupt the battery charging process, this does not mean that the alternator no longer supplies current, but simply that the output voltage is reduced to the extent that the vehicle batteries are not charged. In such operating conditions the different vehicle loads can still be powered by the alternator, while the vehicle batteries act as a capacitor, supplying power during peak absorption by specific devices, such as the fuel injection system, or the braking system, etc.

According to a preferred embodiment of the invention, it is possible to monitor the current absorbed/supplied by each battery, the respective temperature and respective voltage, by means of a measurement device S, which comprises three terminals, two of which connected directly to the negative pole of each battery and one to the positive pole of the vehicle power supply, in order to perform volt-amperometric measurements on the single batteries B1 and B2.

Said device S is of a type known in the prior art and, preferably, comprises a processing unit with "lin" interface, so as to be able to interact with the VCU and/or directly with the at least one alternator G3.

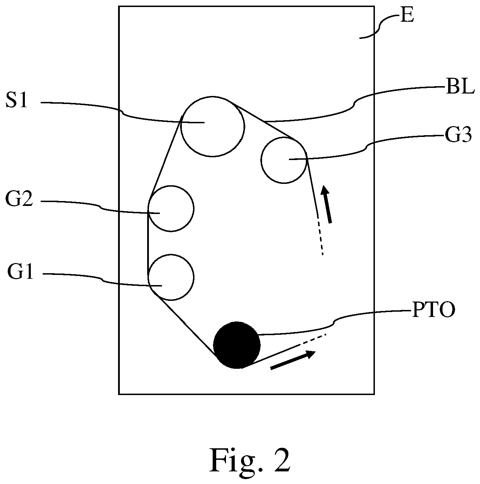

When a vehicle is equipped with two or more generators, see figure 2, a power take-off PTO, generally referred to as a front power take-off, transfers engine power via a belt BL to the various devices onboard the vehicle, including for example, three smart generators G1, G2, G3. S1 represents any device that receives engine torque from said PTO, such as the water pump in the cooling system of an internal combustion engine E, the cooling fan of the cooling radiator and the hydraulic steering system, where applicable.

The vehicle power supply comprises an electrical power line to which the various loads and electrical devices are connected, including the vehicle batteries.

The presence of S1 or other devices and their respective distribution along the course of the belt is entirely optional and may vary from case to case.

Observing a rotation of the belt BL in an anti-clockwise direction, for example, the first alternator to receive the motion transferred by the PTO is G1, then G2 and lastly G3. The so-called "course of the belt" or order of traction is thus defined. From the above description, it is apparent that G1 is the alternator on which the greatest force is exerted, as its bearing must withstand the traction force applied to G2, S1 and G3.

Vice versa, G3 is the alternator subject to the lowest mechanical stress.

According to a preferred embodiment of the present invention, G3 is the alternator that is activated first of all to supply power to the vehicle electrical system.

When the operating temperature of G3 rises, G2 is activated and when the temperature of G2 rises, G1 is activated. Vice versa, when the temperature of G2 falls, G1 is deactivated and when the temperature of G3 falls, G2 is deactivated.

The activation and deactivation temperature thresholds may be selected so as to be sufficiently ample in order to avoid conditions in which activation/deactivation is performed continuously.

Thus, according to such preferred embodiment of the invention, the alternator furthest away from the PTO is activated first, proceeding in reverse order with respect to the direction of rotation of the belt BL, or, in the same way, the alternator nearest to the PTO proceeding in the direction of rotation of the belt BL is the first to be activated.

According to the latter indication, which is exactly equivalent to the first, the second alternator G2 is activated when the first alternator G1 reaches or exceeds a predefined temperature threshold, and so on.

According to a preferred embodiment of the invention, to prevent the application of excessive thermal stress on the generators, said generators may also be controlled as a function of the overall current absorbed by the vehicle electrical power supply system.

With specific reference to the present invention, when the VCU commands charging at a constant current rate, the logic whereby the alternators are activated on the basis of their respective temperatures is superseded by the activation of a further predefined number of alternators.

For example, if activation of G3 is sufficient in order to power the devices onboard the vehicle, when the vehicle batteries B1 and B2 need re-charging, the VCU commands the activation of G2, or G1 and G2, without waiting to detect an increase in the temperature of G3.

Each alternator G1 - G3, according to the speed of rotation of the internal combustion engine E, monitors the respective output current or its efficiency with respect to the respective maximum efficiency curve and sends a message, one per event or cyclically. Said message, according to the embodiments described below, may determine the activation of one or more further generators.

Each of the smart alternators G1 - G3 comprises processing means for the functions described above, that is to say, for controlling the respective electrical device, but also for monitoring the respective temperature and output current. Moreover, said processing means incorporate a communication interface whereby, generally speaking, it is possible to control the electrical power supplied by the alternator.

If generic smart generators are used, that is to say, of the type available on the market, a vehicle processing unit, meaning the VCU or the ECU, interfaces with the smart generators and controls their respective activation. According to said preferred embodiment of the invention, the VCU or ECU receives information from the generators about their respective temperature and commands the activation of G2, G3, etc.

Preferably, each alternator may also send information about the respective output current and/or the efficiency calculated on the basis of the respective efficiency curve which in turn is a function of the number of revolutions of the PTO and of the output current of the alternator. The VCU or ECU, having received such information from the generators that are currently active, can thus command the activation of one or more further generators before those already active reach the aforesaid activation temperature thresholds.

Vice versa, when the efficiency of the active generators decreases, the VCU or ECU only commands a gradual deactivation of the generators after checking that the required temperature conditions have been met. For example, if the output current falls drastically, but G2 is still running at a temperature above the threshold for activation of G1, G1 remains active until the temperature of G2 has fallen below the threshold for deactivating G1.

Thus, on the basis of that described above, the order of activation is given mainly by the position of the alternator on the course of the belt, then by the operating temperature and lastly by the overall current output of the generators.

According to a further preferred embodiment of the invention, the processing means of the smart generators cooperate with one another to activate and deactivate the generators as a function of the information exchanged and not at the command of a vehicle processing unit VCU or ECU. The present invention may advantageously be implemented by means of a computer program comprising coding means to implement one or more steps of the method, when such program is run on a computer. Thus, the scope of protection includes said computer program and computer readable media comprising a recorded message, said computer readable media comprising program coding means for implementing one or more of the steps of the method, when said program is run on a computer.

Other possible embodiments of the non-limiting example of the invention described herein may be implemented without departing from the scope of protection of the present invention.

From the above description it will be possible for the person skilled in the art to implement the object of the invention without the need for any additional construction details. The elements and the characteristics illustrated in the different preferred embodiments may be combined without departing from the scope of protection of the present application.

## Claims

1. A charging system of a pair of batteries mutually connected in series of a heavy vehicle, the system comprising
- at least one alternator (G3) connected to a vehicle electrical power supply system,
- said pair of batteries (B1, B2) mutually connected in series (B1+B2) so that the series thus obtained is connected to said vehicle electrical power supply system,
- monitoring means (S) for monitoring a charging voltage (Vtot) of each of said batteries (B1, B2)
- processing means (VCU, ECU) suitable for interfacing with said monitoring means (S) and configured to control said at least one alternator (G3) so as to vary a related supply voltage, wherein said processing means (VCU, ECU) are configured to
- command the start of a charging process of said series of batteries (B1 + B2), when a difference between the respective charge voltages measured exceeds a first predefined threshold value and to
- command the interruption of said charging process when a derivative of a current absorbed by said series of batteries (B1 + B2) exceeds a second predefined negative threshold value.

2. The system according to claim 1, comprising two or more alternators, wherein each alternator is a smart alternator, equipped with its own processing means and data communication means to communicate with said processing means (VCU, ECU), said one or more alternators being mechanically connected to a PTO by means of a belt (BL) defining a direction of circulation, said direction of circulation identifying a first alternator (G3) and a second alternator (G2) starting from said PTO; wherein said processing means (VCU, ECU) are configured to control an activation of said first alternator (G3) and to command an activation of said second alternator (G2) when a temperature of said first alternator (G3) exceeds a predefined activation threshold (ThU).

3. The system according to claim 2, wherein said processing means (VCU, ECU) are further configured to
- command an activation of at least said second alternator (G2) when said charging process of said series of batteries (B1, B2) has started, and to
- command a deactivation of at least said second alternator (G2) when said charging process is interrupted.

4. The system according to any one of the preceding claims, wherein the terminal connecting a negative pole of the first battery to a positive pole of the second battery is not connected to the vehicle electrical power supply system.

5. A method for charging a pair of batteries mutually connected in series (B1 + B2) of a heavy vehicle, the vehicle comprising
- said pair of batteries (B1, B2) mutually connected in series (B1+B2) and to a vehicle electrical power supply system,
- at least one alternator (G3) connected to said vehicle electrical power supply system to charge said series of batteries,
the method comprising the steps of
- commanding the start of a charging process of said series of batteries (B1 + B2), when a respective voltage (Vtot) drops below a first predefined threshold value, and of
- commanding the interruption of said charging process when a derivative of a current absorbed by said series of batteries (B1 + B2) exceeds a second predefined negative threshold value.

6. The method according to claim 5, wherein when said vehicle comprises two or more alternators, in which each alternator is a smart alternator, equipped with its own processing means and data communication means to communicate with said processing means (VCU, ECU), said one or more alternators being mechanically connected to a PTO by means of a belt (BL) defining a direction of circulation, said direction of circulation identifying a first alternator (G3) and a second alternator (G2) starting from said PTO, then the method further comprises the steps of commanding an activation of said first alternator (G3) and of controlling an activation of said second alternator (G2) when a temperature of said first alternator (G3) exceeds a predefined activation threshold (ThU).

7. The method according to claim 6, further comprising the steps of
- commanding an activation of at least said second alternator (G2) when said charging process of said series of batteries (B1, B2) has started, and
- commanding a deactivation of at least said second alternator (G2) when said charging process is interrupted.

8. The method according to any one of the preceding claims, wherein the terminal connecting a negative pole of the first battery to a positive pole of the second battery is kept disconnected from the vehicle electrical power supply system.

9. A heavy vehicle equipped with said charging system of a pair of batteries mutually connected in series according to any one of claims 1 - 3.

10. A computer program comprising program coding means suitable for implementing all the steps of any one of claims 5 - 7, when said program is run on a computer.

11. Computer readable media comprising a recorded program, said computer readable media comprising program coding means suitable for implementing all the steps of any one of claims 5 -6, when said program is run on a computer.

## Patentansprüche

1. Ein Ladesystem für ein Paar in Reihe geschalteter Batterien eines Schwerlastfahrzeugs, welches System umfasst:
- mindestens ein Generator (G3), verbunden mit einem Fahrzeugstromversorgungssystem,
- das Paar von Batterien (B1, B2), welche in Reihe geschaltet (B1 + B2) sind, sodass die Reihenschaltung, welche dadurch erzielt wird, mit dem Fahrzeugstromversorgungssystem verbunden ist,
- Überwachungsmittel (S) zur Überwachung einer Ladespannung (Vtot) einer jeden der Batterien (B1, B2),
- Prozessmittel (VCU, ECU), geeignet zur Kopplung mit den Überwachungsmitteln (S) und ausgebildet, um mindestens einen Generator (G3) zur Variierung einer zugehörigen Netzspannung zu steuern, wobei die Prozessmittel (VCU, ECU) ausgebildet sind um
- den Start eines Ladeprozesses der Batteriereihe (B1 + B2) zu befehlen, wenn eine Differenz zwischen den jeweiligen gemessenen Spannungen einen ersten vordefinierten Schwellenwert übersteigt und um
- die Unterbrechung des Ladeprozesses zu befehlen, wenn eine Ableitung eines Stromes, welcher von der Batteriereihe (B1 + B2) aufgenommen wird, einen zweiten vordefinierten negativen Schwellenwert überschreitet.

2. Ein System nach Anspruch 1, umfassend zwei oder mehr Generatoren, wobei jeder Generator ein intelligenter Generator ist, ausgestattet mit seinen eigenen Prozessmitteln und Datenkommunikationsmitteln, um mit den Prozessmitteln (VCU, ECU) zu kommunizieren, wobei einer oder mehrere Generatoren mechanisch durch einen Riemen (BL) mit einem Nebenabtrieb (PTO) verbunden sind, welcher eine Richtung der Umdrehung definiert, welche Richtung der Umdrehung einen ersten Generator (G3) und einen zweiten Generator (G2), ausgehend vom Nebenabtrieb (PTO) definiert; wobei die Prozessmittel (VCU, ECU) ausgebildet sind, um eine Aktivierung des ersten Generators (G3) zu steuern und um eine Aktivierung des zweiten Generators (G2) zu befehlen, wenn eine Temperatur des ersten Generators (G3) einen vordefinierten Aktivierungsschwellenwert (ThU) überschreitet.

3. Ein System nach Anspruch 2, wobei die Prozessmittel (VCU, ECU) ferner ausgebildet sind, um
- die Aktivierung mindestens des zweiten Generators (G2) zu befehlen, wenn der Ladeprozess der Batteriereihe (B1, B2) angefangen hat, und um
- eine Deaktivierung mindestens des zweiten Generators (G2) zu befehlen, wenn der Ladeprozess unterbrochen wird.

4. Ein System nach einem der vorstehenden Ansprüche, wobei der Anschluss, welcher einen Minuspol der ersten Batterie mit einem Pluspol der zweiten Batterie verbindet, nicht mit dem Fahrzeugstromversorgungsystem verbunden ist.

5. Ein Verfahren zum Laden von zwei in Reihe geschalteten Batterien (B1, B2) eine Schwerlastfahrzeugs, welches Fahrzeug umfasst
- zwei Batterien (B1, B2), in Reihe geschaltet (B1 + B2) und mit einem Fahrzeugstromversorgungssystem verbunden,
- mindestens einen Generator (G3), verbunden mit dem Fahrzeugstromversorgungssystem, um die Batteriereihe zu laden,
welches Verfahren die folgenden Schritte umfasst:
- Befehlen des Starts eine Ladeprozesses der Batteriereihe (B1 + B2), wenn eine jeweilige Spannung (Vtot) unter einen ersten vordefinierten Schwellenwert fällt, und
- Befehlen der Unterbrechung des Ladeprozesses, wenn eine Ableitung eines Stromes, welcher von der Batteriereihe (B1 + B2) aufgenommen wird, einen zweiten vordefinierten negativen Schwellenwert überschreitet.

6. Ein Verfahren nach Anspruch 5, wobei, wenn das Fahrzeug zwei oder mehr Generatoren umfasst, wobei jeder Generator ein intelligenter Generator ist, ausgestattet mit seinen eigenen Prozessmitteln und Datenkommunikationsmitteln, um mit den Prozessmitteln (VCU, ECU) zu kommunizieren, wobei einer oder mehrere Generatoren mechanisch durch einen Riemen (BL) mit einem Nebenabtrieb (PTO) verbunden sind, welcher eine Richtung der Umdrehung definiert, welche Richtung der Umdrehung einen ersten Generator (G3) und einen zweiten Generator (G2), ausgehend vom Nebenabtrieb (PTO) definiert, wobei die Methode ferner Schritte des Befehls einer Aktivierung des ersten Generators (G3) und der Steuerung einer Aktivierung des zweiten Generators (G2) umfasst, wenn eine Temperatur des ersten Generators (G3) einen vordefinierten Aktivierungsschwellenwert (ThU) überschreitet.

7. Ein Verfahren nach Anspruch 6, ferner umfassend die folgenden Schritte :
- Befehlen einer Aktivierung mindestens des zweiten Generators (G2), wenn der Ladeprozess der Batteriereihe (B1, B2) angefangen hat, und
- Befehlen einer Deaktivierung mindestens des zweiten Generators (G2), wenn der Ladeprozess unterbrochen wird.

8. Verfahren nach einem der vorstehenden Ansprüche, wobei der Anschluss, welcher einen Minuspol der ersten Batterie mit einem Pluspol der zweiten Batterie verbindet, von dem Fahrzeugstromversorgungsystem getrennt bleibt.

9. Ein Schwerlastfahrzeug, ausgestattet mit dem Ladesystem aus einem Paar in Reihe geschalteter Batterien nach einem der Ansprüche 1 bis 3.

10. Ein Computerprogramm, umfassend Programmcodemittel, geeignet zum Ausführen aller Schritte nach einem der Ansprüche 5 bis 7, wenn das Programm auf einem Computer ausgeführt wird.

11. Computerlesbares Medium, umfassend ein gespeichertes Programm, welches computerlesbare Medium Programmcodemittel umfasst, geeignet um alle Schritte eines der vorstehenden Ansprüche 5 bis 6 auszuführen, wenn das Programm auf einem Computer ausgeführt wird.

## Revendications

1. Système de charge d'une paire de batteries mutuellement connectées en série d'un véhicule poids lourd, le système comprenant
- au moins un alternateur (G3) connecté à un système d'alimentation électrique de véhicule,
- ladite paire de batteries (B1, B2) mutuellement connectées en série (B1 + B2) de sorte que la série ainsi obtenue soit connectée audit système d'alimentation électrique de véhicule,
- des moyens de surveillance (S) pour surveiller une tension de charge (Vtot) de chacune desdites batteries (B1, B2)
- des moyens de traitement (VCU, ECU) appropriés pour une interface avec lesdits moyens de surveillance (S) et configurés pour commander ledit au moins un alternateur (G3) de sorte à faire varier une tension d'alimentation connexe, dans lequel lesdits moyens de traitement (VCU, ECU) sont configurés pour
- ordonner le commencement d'un procédé de charge de ladite série de batteries (B1 + B2), lorsqu'une différence entre les tensions de charge respectives mesurées dépasse une première valeur seuil prédéfinie et pour
- ordonner l'interruption dudit procédé de charge lorsqu'une dérivée d'un courant absorbé par ladite série de batteries (B1 + B2) dépasse une seconde valeur seuil négative prédéfinie.

2. Système selon la revendication 1, comprenant deux alternateurs ou plus, dans lequel chaque alternateur est un alternateur intelligent, équipé de ses propres moyens de traitement et moyens de communication de données pour communiquer avec lesdits moyens de traitement (VCU, ECU), lesdits un ou plusieurs alternateurs étant connectés mécaniquement à une prise de force au moyen d'une courroie (BL) définissant une direction de circulation, ladite direction de circulation identifiant un premier alternateur (G3) et un second alternateur (G2) commençant à ladite prise de force ; dans lequel lesdits moyens de traitement (VCU, ECU) sont configurés pour commander une activation dudit premier alternateur (G3) et pour ordonner une activation dudit second alternateur (G2) lorsqu'une température dudit premier alternateur (G3) dépasse un seuil d'activation prédéfini (ThU).

3. Système selon la revendication 2, dans lequel lesdits moyens de traitement (VCU, ECU) sont en outre configurés pour
- ordonner une activation d'au moins ledit second alternateur (G2) lorsque ledit procédé de charge de ladite série de batteries (B1, B2) a commencé, et pour
- ordonner une désactivation d'au moins ledit second alternateur (G2) lorsque ledit procédé de charge est interrompu.

4. Système selon l'une quelconque des revendications précédentes, dans lequel la borne connectant un pôle négatif de la première batterie à un pôle positif de la seconde batterie n'est pas connectée au système d'alimentation électrique de véhicule.

5. Méthode pour charger une paire de batteries mutuellement connectées en série (B1 + B2) d'un véhicule poids lourd, le véhicule comprenant
- ladite paire de batteries (B1, B2) mutuellement connectées en série (B1 + B2) et à un système d'alimentation électrique de véhicule,
- au moins un alternateur (G3) connecté audit système d'alimentation électrique de véhicule pour charger ladite série de batteries,
la méthode comprenant les étapes consistant à
- ordonner le commencement d'un procédé de charge de ladite série de batteries (B1 + B2), lorsqu'une tension respective (Vtot) chute en-dessous d'une première valeur seuil prédéfinie, et à
- ordonner l'interruption dudit procédé de charge lorsqu'une dérivée d'un courant absorbé par ladite série de batteries (B1 + B2) dépasse une seconde valeur seuil négative prédéfinie.

6. Méthode selon la revendication 5, dans laquelle lorsque ledit véhicule comprend deux alternateurs ou plus, dans lesquels chaque alternateur est un alternateur intelligent, équipé de ses propres moyens de traitement et moyens de communication de données pour communiquer avec lesdits moyens de traitement (VCU, ECU), lesdits un ou plusieurs alternateurs sont connectés mécaniquement à une prise de force au moyen d'une courroie (BL) définissant une direction de circulation, ladite direction de circulation identifiant un premier alternateur (G3) et un second alternateur (G2) commençant à ladite prise de force, ensuite la méthode comprend en outre les étapes consistant à ordonner une activation dudit premier alternateur (G3) et à commander une activation dudit second alternateur (G2) lorsqu'une température dudit premier alternateur (G3) dépasse un seuil d'activation prédéfini (ThU).

7. Méthode selon la revendication 6, comprenant en outre les étapes consistant à
- ordonner une activation d'au moins ledit second alternateur (G2) lorsque ledit procédé de charge de ladite série de batteries (B1, B2) a commencé, et
- ordonner une désactivation d'au moins ledit second alternateur (G2) lorsque ledit procédé de charge est interrompu.

8. Méthode selon l'une quelconque des revendications précédentes, dans laquelle la borne connectant un pôle négatif de la première batterie à un pôle positif de la seconde batterie est gardée déconnectée du système d'alimentation électrique de véhicule.

9. Véhicule poids lourd équipé doté dudit système de charge d'une paire de batteries mutuellement connectées en série selon l'une quelconque des revendications 1 à 3.

10. Programme informatique comprenant des moyens de codage de programme appropriés pour mettre en œuvre toutes les étapes de l'une quelconque des revendications 5 à 7, lorsque ledit programme est exécuté sur un ordinateur.

11. Supports lisibles par ordinateur comprenant un programme enregistré, lesdits supports lisibles par ordinateur comprenant des moyens de codage de programme appropriés pour mettre en œuvre toutes les étapes de l'une quelconque des revendications 5 à 6, lorsque ledit programme est exécuté sur un ordinateur.
